# EUROPEAN PATENT APPLICATION

(11) **EP 0 965 544 A1**
(43) Date of publication of application: **22.12.1999**
(21) Application number: 99110937.2
(22) Date of filing: 07.06.1999
(51) Int. Cl.: B65G 39/04

(54) **Roller conveyor for handling roofing tiles, particularly of the beaver-tail type**

(30) Priority: 09.06.1998 IT MO980127
(71) Applicant: Gerardi, Elio, 41100 Modena (IT)
(72) Inventor: Gerardi, Elio, 41100 Modena (IT)
(74) Representative: Modiano, Guido, Dr.-Ing.

(57) **Abstract**

A roller conveyor (1) for handling roofing tiles (2), particularly of the beaver-tail type having at least one protruding tooth (4) at at least one end of their lower face, characterized in that a plurality of pairs of rings (7) are correspondingly distributed along each roller (5) of the conveyor (1), the relative spacing of the rings (7) corresponding substantially to the width of the at least one tooth (4) for centering and guiding the tiles (2), the lower surface of the tiles (2) resting on the crests of the rings (7).

## Description

The invention relates to a roller conveyor for handling roofing tiles, particularly of the beaver-tail type.

Prior art includes motorized conveyors constituted by a plurality of mutually parallel rollers, which are used to transfer clay-based construction components and the like through their production cycle.

Roofing tiles having a rectangular surface which is variously shaped or curved and used to cover roofs are important among clay-based construction components.

Some kinds of roofing tiles and particularly those known as "beaver-tail'' or "Biber'' tiles have, on their lower surface, one or more protruding teeth which are required to allow the mutual anchoring of the tiles during the formation of a roof.

Handling these roofing tiles with conventional conveyors entails first of all the drawback of requiring the use of supplemental tile supporting plates in order to allow correct resting on the rollers.

Disadvantageously, using the supplemental plates entails a considerable increase in the dimensions and in the weight being conveyed and increases production costs.

Moreover, during their travel inside the kilns for firing the clay-based components the plates necessarily absorb heat and therefore require a higher energy expenditure to reach and maintain certain temperatures.

This prior art is susceptible of considerable improvements as regards the possibility to eliminate the above-mentioned drawbacks.

Therefore there is the need to solve the technical problem of finding a roller conveyor for handling roofing tiles, particularly of the beaver-tail type, which allows to eliminate the use of the supplemental supporting plates, to significantly reduce production costs and the dimensions and weights travelling on the rollers, and to save energy during the firing of the conveyed products.

Within the scope of this technical aim, an object of the present invention is to achieve this aim with a structure which is simple, relatively easy to provide in practice, safe in use, effective in operation and relatively low in cost.

This aim and this object are both achieved by the present roller conveyor for handling roofing tiles, particularly of the beaver-tail type having at least one protruding tooth at at least one end of their lower face, characterized in that a plurality of pairs of rings are correspondingly distributed along each roller of the conveyor, the relative spacing of the rings being substantially equal to the width of said at least one tooth for centering and guiding the tiles, the lower surface of said tiles resting on the crests of the rings.

Further characteristics and advantages of the present invention will become apparent from the detailed description of a preferred but not exclusive embodiment of a roller conveyor for handling roofing tiles, particularly of the beaver-tail type, according to the invention, illustrated only by way of non-limitative example in the accompanying drawings, wherein:
Figure 1 is a plan view of a portion of a roller conveyor for handling roofing tiles, particularly of the beaver-tail type, according to the invention;
Figure 2 is an enlarged-scale top plan view of a roller of the conveyor of figure 1;
Figure 3 is a perspective view of a beaver-tail roofing tile provided with two protruding teeth;
Figure 4 is a view of the roofing tile of Figure 3 from below;
Figure 5 is a front view of two roofing tiles and of a portion of the conveyor according to the invention.

With particular reference to the above figures, the reference numeral 1 generally designates a roller conveyor according to the invention for handling roofing tiles 2, particularly of the beaver-tail type and having at least one protruding tooth.

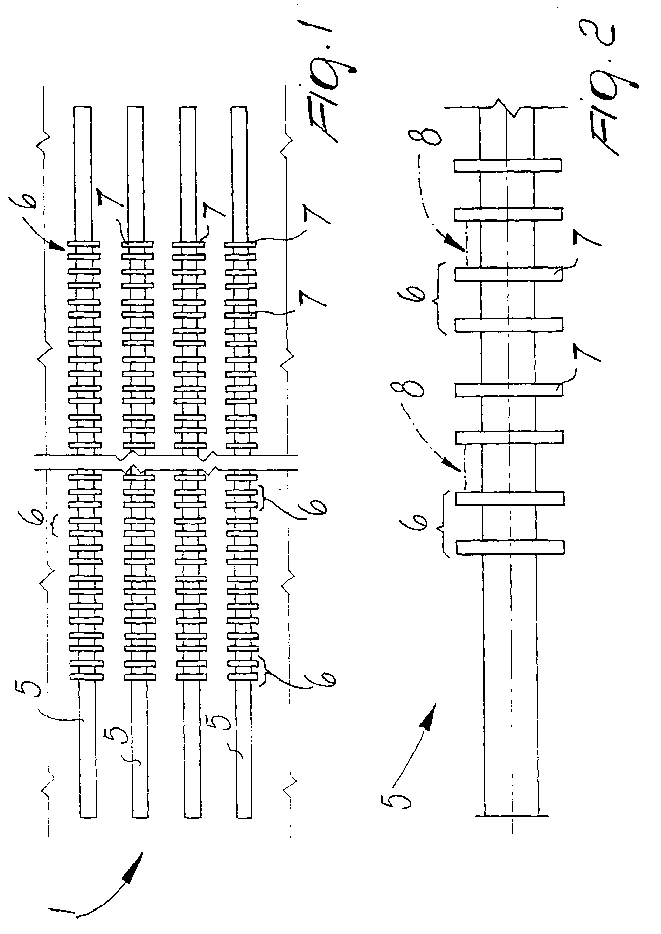

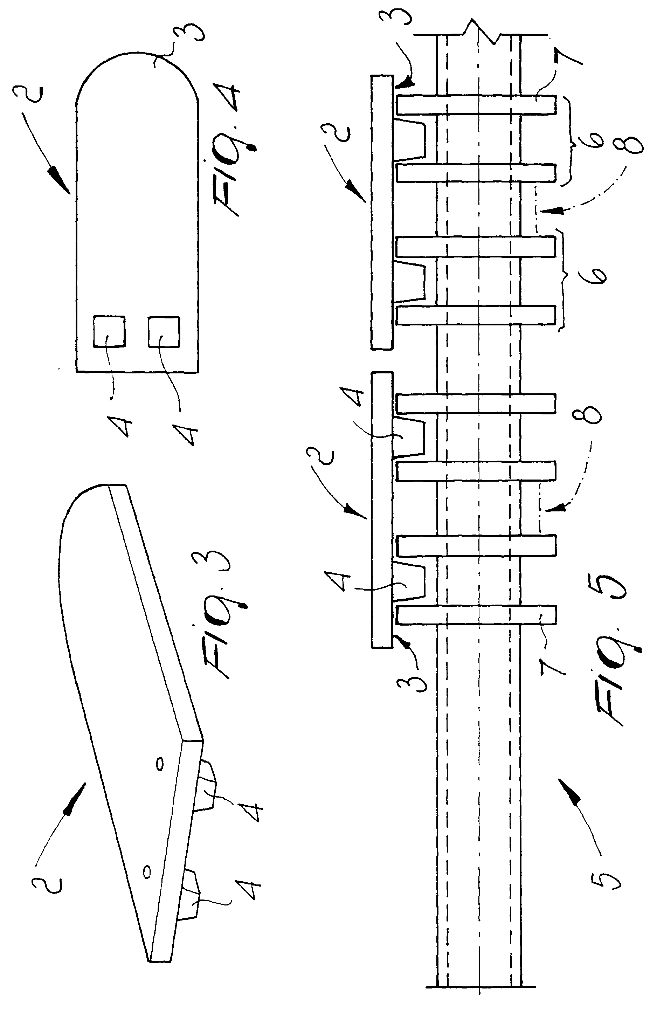

In Figure 3, the tiles 2 have, at one end of the lower face 3, two protruding teeth 4 which are conveniently spaced one another.

The rollers 5 of the conveyor 1 are parallel one another and each one has a plurality of pairs of rings 7 distributed thereon; the rings are arranged at a mutual distance corresponding to the width of the teeth 4.

Conveniently, in order to allow the centering and guiding of each roofing tile 2 of the type of figure 3, the rings of two adjacent pairs 6 have a pitch 8 which substantially corresponds to the distance between the two teeth 4.

Each tooth 4 engages each adjacent pair 6 of rings 7, while the lower surface 3 of the roofing tile 2 rests on the crests of the rings.

The rings 7 can be made of the same material as the rollers 5 or, as an alternative, they can be made of a different material and be rigidly coupled to the corresponding roller by cementing and/or fixing pins, not shown.

Among the different possible embodiments, the rings 7 and the rollers 5 are made of silicon carbide or, as an alternative, of a material such as steel or, as an alternative, of a ceramic material, a refractory material or a material such as superalloys based on nickel and cobalt.

Advantageously, the teeth 4 of each roofing tile 2 can extend along most of the lower surface 3 so as to engage more than one corresponding pair of rings of rollers 5 to better guide the roofing tile 2 along its path on the conveyor 1.

The invention thus conceived is susceptible of numerous modifications and variations, all of which are within the scope of the inventive concept.

All the details may furthermore be replaced with other technically equivalent ones.

In its practical embodiment, dimensions, materials and constructive details may be different from the ones described without thereby abandoning the scope of the present invention.

The disclosures in Italian Patent Application No. M098A000127 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A roller conveyor for handling roofing tiles, particularly of the beaver-tail type having at least one protruding tooth at at least one end of their lower face, characterized in that a plurality of pairs of rings are correspondingly distributed along each roller of the conveyor, the relative spacing of the rings corresponding substantially to the width of said at least one tooth for centering and guiding the tiles, the lower surface of the tiles resting on the crests of the rings.

2. The conveyor according to claim 1, characterized in that in order to handle roofing tiles having two spaced teeth, the rings of two adjacent pairs of each roller have a pitch which corresponds to the distance between the two teeth for centering and guiding the tiles.

3. The conveyor according to one or more of the preceding claims, characterized in that the rings are cemented to the corresponding roller.

4. The conveyor according to one or more of the preceding claims, characterized in that the rings are fixed to the corresponding roller by means of pins and/or the like.

5. The conveyor according to one or more of the preceding claims, characterized in that the rollers and the rings are made of the same material.

6. The conveyor according to one or more of the preceding claims, characterized in that the rollers and the rings are made of different materials.

7. The roller conveyor for handling roofing tiles, particularly of the beaver-tail type, according to one or more of the preceding claims and according to what is described and illustrated for the specified purposes.
